Europäisches Patentamt

European Patent Office

Office européen des brevets

(11) Publication number: **0 392 117 B1**

# EUROPEAN PATENT SPECIFICATION

(45) Date of publication of patent specification: **19.01.94**  (51) Int. Cl.⁵: **B60C  9/20**

(21) Application number: **89311377.9**

(22) Date of filing: **02.11.89**

(54) **Pneumatic tyre.**

(30) Priority: **11.04.89 JP 93891/89**
         **24.05.89 JP 131208/89**

(43) Date of publication of application:
    **17.10.90 Bulletin  90/42**

(45) Publication of the grant of the patent:
    **19.01.94 Bulletin  94/03**

(84) Designated Contracting States:
    **DE FR GB**

(56) References cited:
    **WO-A-80/00069**
    **GB-A- 2 092 963**

(73) Proprietor: **SUMITOMO RUBBER INDUSTRIES LIMITED**
    **1-1 Tsutsuicho 1-chome**
    **Chuo-ku**
    **Kobe-shi Hyogo-ken(JP)**

(72) Inventor: **Ootani, Takao**
    **97-26 Noguchicho Nagasu**
    **Kakogawa-shi Hyogo-ken(JP)**
    Inventor: **Ueyoko, Kiyoshi**
    **2-10-2 Fukaeminami**
    **Higashinari-ku**
    **Osaka-shi Osaka-fu(JP)**
    Inventor: **Takatsu, Mikio**
    **1-12-18 Takatsukasa**
    **Takarazuka-shi Hyogo-ken(JP)**
    Inventor: **Miyazaki, Shinichi**
    **3-7-43-303 Miyukicho**
    **Suma-ku**
    **Kobe-shi Hyogo-ken(JP)**

(74) Representative: **Stewart, Charles Geoffrey**
    **SP TYRES UK LIMITED**
    **Tyre Technical Division**
    **Fort Dunlop, Erdington, Birmingham B24 9OT (GB)**

## Description

The present invention relates to a pneumatic tyre particularly those intended for high speed and heavy load use, especially aircraft tyres. It may also be applied to tyres for passenger cars, tyres for trucks, or the like.

In pneumatic tyres used in such conditions of heavy loads at high speed, especially aircraft tyres, the speeds and loads in use have increased along with the increase in aircraft size and flight speeds.

Thus aircraft tyres are now required:-

1. To withstand large and repeated deformations because the deflection when taking off and landing is very large in order to effectively lessen the shocks on the aircraft. Typical deflection are 28 to 38%.

2. To withstand high speed rotation under heavy load and large deformation since the taking off and landing are high or moving higher along with the higher flight speeds of aircraft;

3. To withstand extremely high internal pressure, for example 10 to 16 kgf per sq.cm, to which the tyre is inflated to withstand heavy load of about 130 to 360 times the tyre unit weight (in ordinary tyres it is about 50 times) exerted on the tyre due to increased aircraft size;

4. To withstand the so-called taxi condition, that is, low speed but heavy load running for a relatively long time when moving from the runway to the gate which requires great durability; and

5. To have increased cornering power in order to prevent the aircraft body from being shaken when turning on the taxiway or the like and to have enhance steering stability and thus safety.

Enhancement of steering stability also contributes to prevention of rolling and swivelling of aircraft when taking off and landing.

Moreover, when taking off, landing, or taxing between a runway and a gate, the tread can often be damaged by foreign objects on the ground. Such damage can reach up to the vicinity of internal reinforcement relatively easily, and the reinforcements are often damaged which greatly lowers the durability of the tyre.

Hence, the resistance of the tread against such damage that is, the cut resistance is required to be improved.

Further, damage to the internal reinforcing layer sometimes make it difficult to retread the tyre.

On the other hand radial or semiradial ply structures are now widely employed as well as cross ply structures.

In a cross ply structure the carcass plies are arranged to intersect each other, the transverse stiffness of the tyre is large, and accordingly cross ply tyres are relatively good in steerability. However, cross ply tyres are generally poor in tread stiffness which is bad for wear resistance and heat generation resistance. accordingly, their use in high performance, large sized jets is decreasing, and they are increasingly being replaced by radial ply tyres provided with a radial or semiradial carcass and a belt disposed radially outside the carcass composed of high modulus cords arranged at a small angle with respect to the equator of the tyre.

Nevertheless, it is important in cross ply tyres having no belt to reinforce the tread as well as to enhance the cut resistance in order to protect the carcass.

On the other hand, in radial ply tyres, as the belt cords extending in the circumferential direction of the tyre bring about a large hoop effect in the tread portion, the outward bending stiffness of the tread portion (the stiffness to bending in the normal direction to the tread surface or to bending in the direction parallel to the equatorial plane of the tyre is increased and therefore the wear resistance is improved while the rolling resistance is decreased, and hence the durability of the tyre is increased.

In conventional radial tyres, however, the angle of intersection of the cords of the belt plies is small, and the angle between the cords of the belt plies and the carcass plies is approximately a right angle, that is, the cords of the belt plies and carcass plies have a rectangular arrangement. Accordingly the inward bending stiffness of the tread portion (the stiffness to bending in the widthwise direction of the tread or to bending in the direction parallel to the tread surface) is slightly inferior.

As a result the cornering power is lowered, and shaking or the like or the aircraft is likely to occur. Also a sufficiently good structural durability performance cannot be expected.

In the Japanese Laid-Open Patent 61-196804, an aircraft tyre having a band disposed outside a belt is proposed. In this aircraft radial tyre, the band improves the cut resistance of the tread, and the inward bending stiffness of the tread (the stiffness of the tread against bending in its widthwise direction) is increased, but organic fibre cords are used as the band cords. The result is that the cut resistance is not improved.

On the other hand, in Japanese Laid-Open Patent 57-201704, a tyre having a band of corrugated steel cords is proposed. Since this cord is steel although it is corrugated, its elongation is small. therefore because the tight hoop effect of the band, the inflated shape of the tyre is distorted or warped, and sometimes the tread ribs may meander.

If this type of steel cord band is used in a cross ply tyre, the tyre weight is further increased, and tyre durability is lowered.

It also has been found that the bead portions of conventional tyres are relatively low in respect of durability compared to other portions, and further standing waves are likely to occur in conventional tyres at high speeds.

With regard to the durability of the bead portions, since the radial deflection of the tyre is very large, about 28 to 38% as stated above, when the bead portions are deformed in a manner that they lean over the rim flanges, a compressive, stress acts on the folded back portions of the carcass cords in the bead portions.

Therefore, the carcass cords are repeatedly subjected to compressive strain from the compressive stress, and the cords fatigue and finally can be broken, thereby leading to bead failure.

With regard to the standing wave, the standing wave generated in the tread portion not only lowers the durability of the tread portion, but also propagates to the bead portions through the sidewall portions to lower still further the durability of the bead portions.

The critical speed of generation of a standing wave in the radial tyre is, as known well, determined by the following equation.

$$ V_c = \sqrt{ T/m + 2\sqrt{E1 * K/m} } \qquad (1) $$

where Vc critical speed for generation of standing wave

m mass per unit length of the tread portion

E1 inward bending stiffness of the tread portion

T belt tension

K spring constant of the carcass

and wherein the belt is assumed to be an infinite beam elastically supported by the carcass

As is clear from this equation (1) the critical speed for generation of a standing wave Vc can be increased by lowering the mass m and/or increasing the stiffness E1 the belt tension T and/or the carcass spring constant K.

To increase the critical speed for generation of a standing wave Vc without decreasing the mass m, a large tension T should be applied to the belt when the tyre is inflated, so that whereby the natural frequency of the belt is increased.

It was also confirmed that the inward bending stiffness E1 of the tread portion is apparently increased with increase in belt tension which raises the critical speed Vc.

The belt tension T can be increased by using extensible cords as carcass cords, but this tends to lower the cornering power.

It is a general object of the present invention to provide a pneumatic tyre improved in cut resistance.

It is another object of the present invention to provide a pneumatic tyre improved in cornering power without sacrificing other tyre performance properties.

According to the present invention a pneumatic tyre comprises a carcass ply extending between bead portions of the tyre and turned up around a pair of bead cores one disposed in each bead portion, a tread disposed radially outside the carcass ply, and a cut protector disposed between the tread and the carcass ply, said cut protector composed of at least one ply of protective cords, characterised by each said protective cord comprising a main cord and at least one winding of a metallic wire spirally wound over the main cord, said main cord composed of a plurality of strands twisted together, each said strand being made of organic fibre filaments, the direction of the winding of the metallic wire being opposite to the direction of the twist of the strands, the total denier of the main cord being 600 to 4050 (300d/2 to 1350d/3), the metallic wire being thinner than the main cord and the diameter of the wire being 0.05 to 0.3mm.

The wire winding may be a single wire winding or two wire winding the second being wound in the opposite direction to the first. Preferably the metallic wire is steel.

The tyre may be a cross ply tyre or a radial ply tyre with a tread reinforcing breaker.

The cut protector may be a single ply or may have two plies one of which is adjacent to the carcass. A retread rubber layer may be between the protector plies to assist the removal of the tread rubber for tyre retreading without damage to the carcass.

The provision of the cut protector outside the carcass substantially prevents the carcass from being damaged if the tread rubber is injured by foreign objects or the like lying on the road surface. Further since the cords of the cut protector are composite cords made of a main cord made of organic fibres and at least one metallic wire winding therearound, the metallic wire functions as a protector for the main cord, and damage to the carcass can be prevented very effectively.

Furthermore, since the main cord is made of organic material the protective cord has the proper extensibility to match the structure and as a result, generation of any great difference in stiffness between the carcass and the tread rubber is avoided, and injury of the tread and its extension can be prevented.

Besides, the increase in tyre weight is kept to a small amount.

Still furthermore, since the cut protector is disposed inside the tread, the inward bending stiffness of the tread is increased, which contribute to an improvement in cornering power.

What is more, when the belt cords are laid at an angle of 5 degrees or less respect to the equator of the tyre, the belt provides a hoop effect to the carcass and raises the stiffness of the tread portion.

When extensible carcass cords are used, the carcass cords may have a large elongation and therefore a large tension when the tyre is inflated. Such elongation and tension reduces the compressive stress acting on the carcass cords due to the deformation of the overbead portion in which the bead portion overlaps the rim flange as stated above. Therefore, generation of local stress due to the compressive deformation of cords and breakage of cords due to fatigue prevented. Furthermore, concentration of repeated stresses on the bead portions is alleviated and the durability if the durability of the bead portion is improved.

On the other hand, since the expansion of the tread portion due to tyre inflation is large in the tread crown portion, the tension of the belt (when provided) in this area becomes large, and the apparent stiffness E1 of the tread portion is increased. As a result, the critical speed for generation of standing wave is raised and its generation is restricted.

These and other aspects of the invention, as well as the features and advantages thereof, will be better understood and appreciated from the following detailed description, by way of example only, taken in conjunction with the drawings, in which:

Fig. 1. is a sectional view showing an embodiment of the present invention

Fig. 2 is a sectional view showing a modification of the tyre shown in Fig.1.

Fig.3. (A) and (B) are diagrams showing examples of protective cords.

Fig.4. is a graph explaining the characteristics of the protective cords.

Fig.5 (A) and (B) are graphs explaining the characteristics of the carcass cords.

Fig.6 is a diagram explaining the initial modulus of elasticity

Fig.7 is a schematic perspective partial view showing a drum for a cut resistance test.

Fig.8 is a sectional view showing another embodiment of the present invention and

Fig.9 is a sectional view showing a ply configuration thereof.

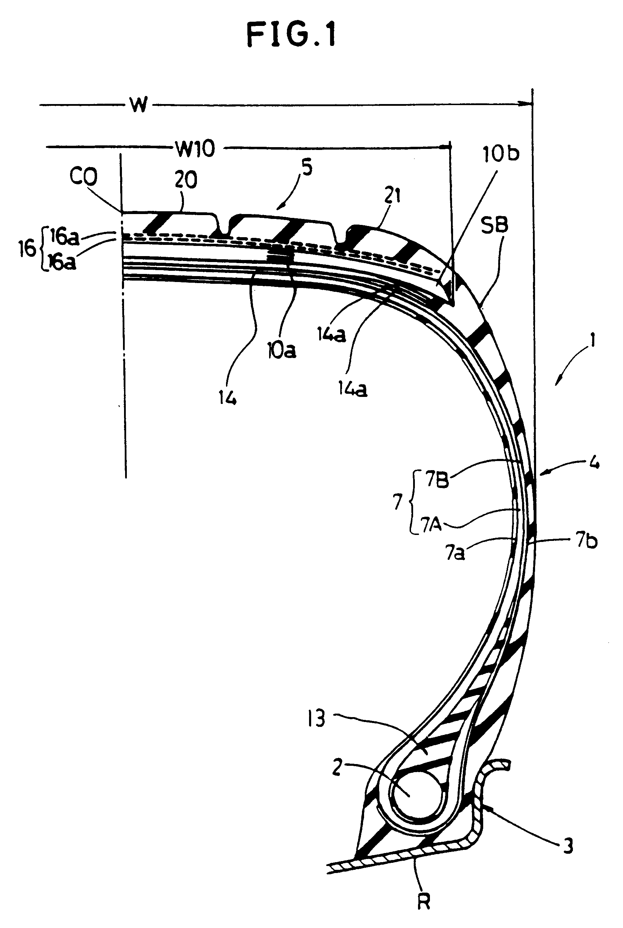

Fig.1 shows an aircraft radial tyre of size 46 X 17R20. The tyre 1 has a pair of bead portions 3 each with a bead core 2, a pair of sidewall portions 4 extending radially outwardly one from each bead portion 3, and a tread portion 5 extending between the radially outer ends of the sidewall portions 4. The tyre 1 is mounted on a regular rim R and inflated to a regular pressure.

The carcass 7 consists of an inner layer 7A and an outer layer 7B. The inner layer 7A is composed four carcass plies 7a turned up around the bead core 2 from the inside to the outside of the tyre. The outer layer 7B is composed of two carcass plies 7b turned from the outside to the inside of the tyre along the outside of the turned up portion of the inner layer 7A.

The carcass cords of the carcass plies 7a, 7b are arranged radially of the tyre, at 75 to 90 degrees to the tyres equator CO. In order to enhance the transverse stiffness of the tyre, the carcass plies have their cords inclined alternatively with respect to the radial direction of the tyre so that each intersects the cores of the next ply.

A rubber bead apex 13 extending taperingly in the radial direction of the tyre is disposed above each core 2, whereby the stiffness of the bead portions is increased, and stress due to deflection in the turned up portions of the carcass 7 is dispersed.

Incidentally, a rim chafer (not shown) for preventing abrasion of the bead against the wheel rim can be disposed along the outer surface of the bead portion 3.

A belt 10 is disposed radially outside the carcass 7 and inside the tread. The belt cord is laid at an angle not more than 5 degrees to the equatorial plane of the tyre.

Outside the belt 10, a cut protector 16 made of protective cords is disposed. Furthermore, in this embodiment, a cut breaker 14 is disposed between the belt 10 and the carcass 7.

4

The cut breaker 14 has cords arranged at an angle of 0 to 70 degrees with respect to the equatorial plane of the tyre.

The belt 10 is composed of a plurality of, for example, 6 to 10 belt plies 10a. The width of each belt ply 10a is decreased gradually outwardly in the radial direction so the plies 10a become narrower as the plies are positioned outwardly in the radial direction. Therefore, the entire structure of the belt plies 10a, that is, sectional shape of the belt 10 is trapezoidal. Meanwhile, the side surface 10b of the belt is a slant approximately parallel to the contour SB of the tyre buttress portion.

The maximum width W10 of the belt 10, in this embodiment the width of the innermost broad ply 10a is in the range of 75 to 85% of the tyre overall width W.

The belt plies are sequentially inclined reversaly to each other with respect to the circumferential direction.

The cut protector 16 comprises at least one and in this embodiment, two plies 16a of cords. This cut protector 16 increases the cut resistance of the tread portion, alleviates the difference in stiffness between the belt 10 and the tread rubber, and reduces the shearing stress between the belt and the tread rubber. Accordingly, damage of the tread portion 5 and extension or growth of any slight damage are restricted. From this point of view, the cut protector 16 preferably includes two plies 16a extending over the width of the belt 10.

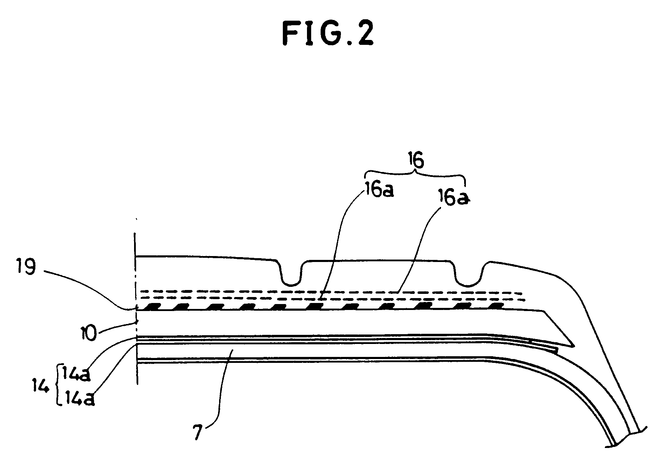

The cut protector 16 may be formed in a single ply or as plural plies of three or more, and between the cut protector 16 and the belt 10 a rubber layer 19 may be disposed as shown in Fig.2. This rubber layer 19 helps removal of the cut protector 16 without injuring the belt 10 when retreading the tyre.

The cut breaker 14 is composed of two cut breaker plies 14a. This cut breaker 14 leaves the carcass 7 at the tread shoulder portion 21, and their distance apart gradually increases outwardly.

The outer end of the cut breaker 14 is terminated axially inwards of the outer end of the belt 10. The outer end of the cut breaker may be aligned with the outer end of the belt 10 or may project slightly therefrom.

The cut breaker 14 is intended to increase the inward bending stiffness of the tread portion 5 and improve the cornering power. For this purpose, preferably, the cut breaker 14 is disposed so that the cut breaker cords, carcass cords and belt cords provide a triangulated structure. More specifically, with respect to the equator of the tyre, the carcass cords are arranged at 75 to 90 degrees, the belt cords at 5 degrees or less, and the cut breaker cords at 10 to 45 degrees or preferably 10 to 30 degrees. When the carcass cords are arranged at 75 to 80 degrees, the angle of the cut breaker cords can be set at around 0 degrees. In this way, the cut breaker cords are arranged in the range of 0 to 70 degrees.

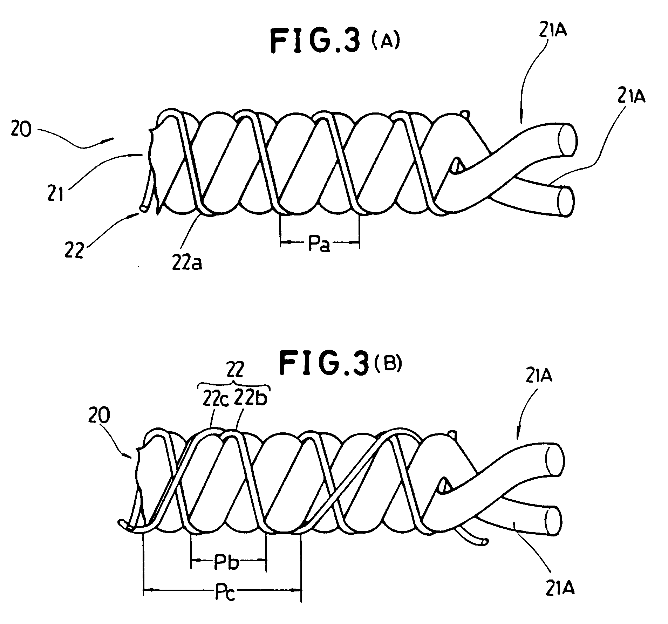

The protective cord 20 is, as shown in Fig.3 (A), (B), a composite cord composed of a main cord 21 of organic fibres and at least one metallic wire 22 around the main cord 21. For the wire, steel of high strength is preferably used because the wire has to enhance the cut resistance of the tread portion 5.

The main cord 21 is, in order to enhance its elasticity and elongation, a laid cord composed of two strands 21A made of organic fibres such as rayon, polyester, vinylon, nylon 66, aliphatic polyamide, aromatic polyamide, polyvinyl alcohol or the like.

The thickness of the main cord 21 is preferably a relatively small thickness of about 300 d/2 to 1350 d/3. For the main cord, there can be used a single thick strand made of organic fibres strands made of monofilament, or the like.

For the wire 22, it is possible to use only a single steel wire 22a spirally wound around the main cord 21 shown in Fig.3. It is however possible, for the cord of Fig.3 to use one inner steel wire 22b spirally wound around the main cord 21 and one outer steel wire 22c spirally wound outside the inner steel wire 22b in the reverse winding direction to the inner steel wire 22b.

When the main cord is a laid cord as mentioned above, the wire 22b shown in Fig.3 and the inner wire 22b in Fig.3 (B) are spirally wound in the reverse direction to the lay direction of the main cord to prevent loosening of the main cord.

The diameter of the steel wires 21a to 21c is about 0.05 to 0.3mm and they should be preferably plated with brass to a thickness of about 2 microns or more in order to prevent rust and to improve their adhesion to rubber.

When only one steel wire 22a is used as shown in Fig.3 (A), the spiral winding pitch Pa, that is, the lay length is 0.3 to 1.2mm and it is set larger than the diameter of the steel wire 22a.

When the steel wires 22b and 22c are used as shown in Fig.3 (B), the pitch Pc of the outer steel wire 22c is set larger than the pitch Pb of the inner steel wire 22B. For example, the pitch Pb of the inner steel wire 22b is about 0.3 to 1.2mm, and the pitch Pc of the outer steel wire 22C is about 1.0 to 2.0mm.

The steel wire protects the organic main cord because their spiral winding pitches are as specified in the ranges stated above.

The elasticity of the protective cord 20 is also maintained. For that purpose, the minimum gap of the steel wires wound spirally is preferably set larger than 50% of the wire diameter.

When the spiral pitches Pa, Pb are larger than 1.2mm, the gaps between adjacent steel wires become excessively wide, and the function as the cut protector 16 is lowered.

The outer steel wire 22b is also intended to enhance the protective function while maintaining the elasticity of the protective cord 20, and it should be wound at a lay length longer than the inner steel wire 22b, and therefore the range is as specified above.

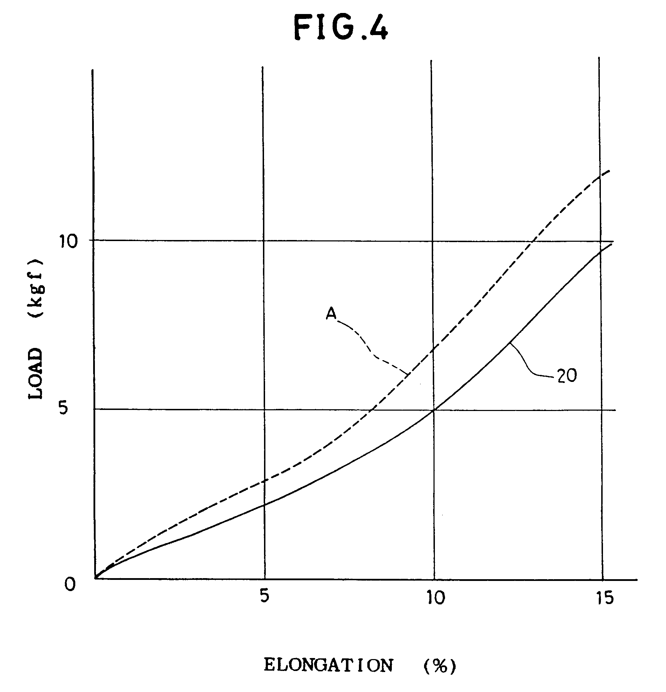

Fig.4 shows the elongation curve of a protective cord 20 as a solid line, wherein its main cord 21 is made of nylon-66 1260d/2 strands laid in S direction, and an inner steel wire 22b of 0.15mm in diameter is laid at a spiral pitch Pb of 0.88mm in the Z direction, and an outer wire 22c of the same diameter is laid at a spiral pitch Pc of 1.39mm in the S direction.

In the same figure, the elongation curve of a cord A which is a 1260 D/2 nylon-66 cord with no wire is indicated by the broken line.

As apparent from Fig.4 the protective cord 20 with the steel wires 22b, 22c shows a larger elongation at the same load, compared with the cord A with no steel wire. This is because the diameter of the main cord 21 has been primarily reduced by winding of the steel wires, 22b, 22c and the length of the main cord 21 is decreased by the spring back after winding the steel wires 22b, 22c.

It has been shown that the rupture load (kgf) of the protective cord 20 is lowered by about 20% as compared with that of the cord A. This is considered to be due to notches formed by winding of the steel wires 22b, 22c, but such a degree of lowering does not matter for the protective cord 20 in which the improvement of cut resistance property is more important.

The protective cords 20 can be laid an an angle between 0 to 90 degrees with respect to the tyres equator CO to form the plies 16a of the cut protector 16. However in order that the cut protector 16 initially provided to enhance the cut resistance may further improve the inward bending stiffness of the tread portions 5 to increase the cornering power, the protective cords 20 are preferably inclined in the range of 20 to 55 degrees, and more preferably, 30 to 45 degrees to the tyres equator CO so as to intersect the belt 10.

The density of the protective cords is 20 to 60 ends/5 cm, and more preferably 30 to 50 ends/5 cm. If less than 20, the cut resistance is lowered, and if exceeding 60, the tyre weight increases and the cost becomes higher.

The cut protector 16 can be formed in a single or two or more ply structure as stated above, but preferably it should contain at least one ply extending over the entire width of the ground contacting region.

The cut protector 16 in this invention can be formed by a cord winding method to wind one or a plurality of protective cords 20 spirally and continuously at a small angle in the peripheral direction.

The elastic cords used in the carcass cords possess high extensibility.

For example the elongation at 5kg load (S5) is 5 to 10% preferably 5 to 8%, the elongation at 10 kg load (S10) is 9 to 15% preferably 10 to 12% and the elongation at 20 kg load (S20) is 14 to 20%.

In another example the elongation at 5kg load (S5) divided by the total denier number of the cord (D5) is

$7.35 \times 10^{-4}$ to $14.7 \times 10^{-4}$

the elongation at 10 kg load (S10) divided by the total denier number of the cord (D10) is

$13.2 \times 10^{-4}$ to $22.1 \times 10^{-4}$

the elongation at 20 kg load (S10) divided by the total denier number of the cord (D20) is

$20.5 \times 10^{-4}$ to $29.4 \times 10^{-4}$

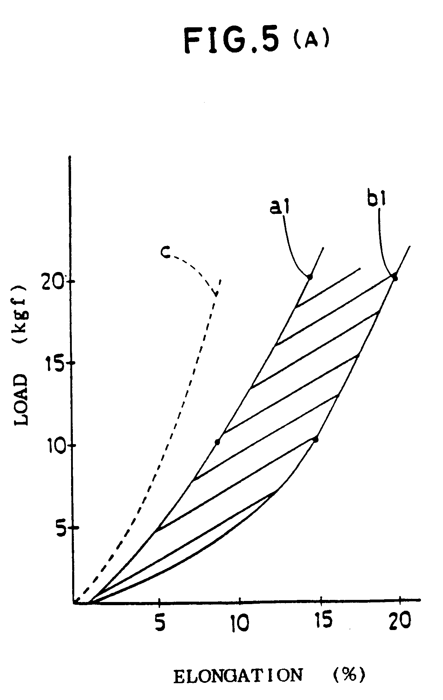

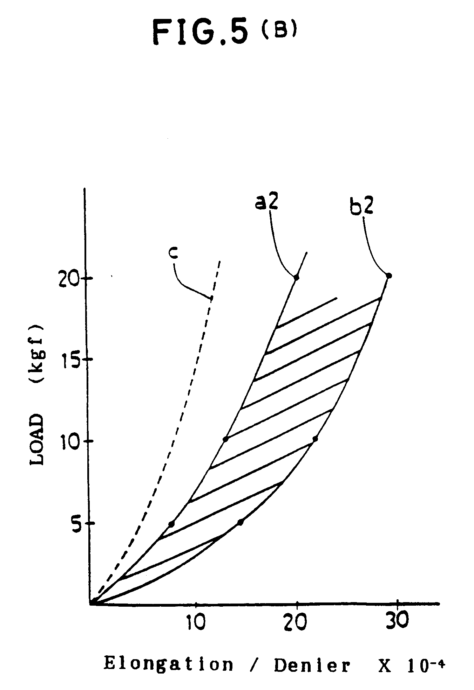

As shown in Figs.5 (A) and (B), an elastic cord having such extensibility is within the region between the lower limits a1 & a2 and upper limits b1, & b2. That is, in such elastic cords, as the loads increases, the elongation drops, and the elongation is therefore large while the load is small.

By using such elastic cords in the carcass, in the initial stage of inflation, the carcass cords are greatly extended as the tyre is inflated. When the inflation is advanced until the cord load reaches 10 kg or 20 kg, the carcass cords are elongated along with the load increase, but the rate of elongation then decreases gradually.

Curve c shows that the characteristics of a typical conventional cord is large in the starting portion and is linear, as compared with curve a.

When such a conventional cord is used, the elongation of the carcass cord an inflated tyre is smaller, and therefore the compressive stress acting on the carcass cord due to deformation of the bead portion is not effectively lessened.

By contrast, the above elastic cord having the characteristics in the region between curves a and b, can enhance the durability of the tyre.

Meanwhile in the former definition of the elongation S5, S10, S20, the elongation of the cord itself is defined regardless of the total denier number.

On the other hand, in the latter definition of the value of each elongation divided by the total denier number, the elongation of the cord is determined per total from the viewpoint of the characteristic possessed by the cord, principally. Therefore, it can be applied to various types of tyres for heavy load and high speed including aircraft tyres.

The former definition mainly refers to the values preferably applied to aircraft tyres, especially jumbo jet tyres.

Furthermore, the initial modulus of elasticity Es (kgf/sq.mm) of the elastic cord should be 130 or more (preferably 140 or more) and 200 or less. This is smaller as compared with that of the conventional elastic cord, and therefore the elastic cord is increased in extensibility, and the elongation of carcass cord increases.

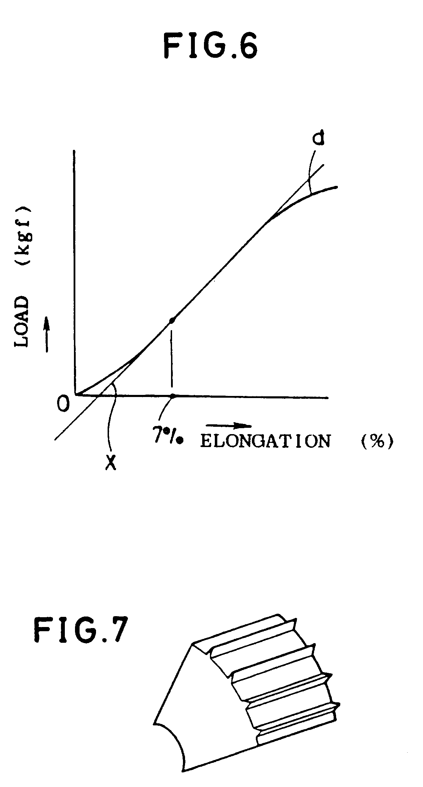

The initial modulus of elasticity Es (kgf/sq.mm) is defined as the gradient of the tangent X of curve d at 7% elongation. This is obtained by plotting the load (kg) - elongation (%) curve d as shown in Fig.6 by using a constant speed elongation type tensile testing machine.

The load at rupture of the elastic cord, that is, the cord strength is 30 or more, and more preferably 40 kg or more and 60 kg or less.

For the above-mentioned elastic cords, nylon cords, polyester cords, aromatic polyamide cords, carbon cords, and hybrid cords composed of different materials, and further metallic cords may be used.

When an organic fibre cord is used, the above characteristic can be obtained by significantly decreasing the tension in a dip stretching treatment to apply a tension and heat to the cord for specified time, as compared with that in the prior art.

When a nylon cord is used in order to enhance the characteristics, the number of turns or twists is increased from the conventional 23 turns/10 cm to between 26 and 36 turns/10 cm.

The elastic cords can be alternatively composed by mixing cord having a low elongation property and cases having a high elongation property, wherein the low elongation cords are wound in a coil to provide a looseness, whereby when the load reaches a specified value, the low elongation cords receive the burden, and the elongation rate is the lowered on the whole.

The elastic cords are embedded in a topping rubber to form the above-mentioned carcass plies 7a, 7b.

This rubber, in addition to high strength and low heat generation, must have such properties as being able toy derive the above explained characteristics from the elastic cords.

For example, a rubber composed of one or more types of rubber selected from natural rubber and synthetic isoprene rubber as its base and carbon black at 50 to 70 parts by weight, and having a 100% modulus of 30 to 70 kgf/sq.cm and an elongation at rupture of 200% or more and 500% or less, is preferably used.

If the carbon content is less than 50 parts by weight, the reinforcing effect of the carbon is lowered, and when exceeding 70 parts by weight, heat generation tends to be larger.

If the 100% modulus is less than 30 kgf/sq.cm, the heat generation increases, and if exceeding 70 kgf/sq.cm, the strength is lowered.

When the elongation at rupture is less than 200% the rubber follow up property or carcass distortion is not enough and the rubber is likely to be broken down, when exceeding 500% the heat generation increases.

Because the carcass cord is made of elastic cords, the carcass 7 has a larger elongation when the tyre is inflated compared to a conventional tyre, and the compressive stress of the carcass cord generated at the rim flange C side of the bead portion due to bending of the bead portion 3 is lowered, and the compressive strain of the cord is lessened, thereby preventing deformation of cords, local bending, or breakage by fatigue due to compressive strain.

Moreover, the compressive stress of the rubber itself of the bead portion 3 is also alleviated and the durability of the bead portion is increased, for example, by 100% or more.

On the other hand, when such elastic cords are used in the carcass 7, the distortion of the tyre due to inflation tends to be concentrated in the sidewall portions, in particular, in the vicinity of the maximum width area of the tyre.

Therefore, to prevent this, the belt cords II, together with the cut breaker cords, are arranged to have the same elongation characteristics as that of the carcass cords, and they are so set that the elongation at 5kg load (S5) is 3 to 6%, or the value of elongation (S5) divided by the total denier number (d, (D5 %d) is 0.000385 to 0.000769 which is smaller than that of the carcass cord.

Incidentally, the belt cords and the carcass cords are of substantially the same thickness, for example, relatively thick cords of about 1260 d/2 to 2700 d/3 while the breaker cord is a cord of the same or smaller thickness.

The belt 10 may be also formed as an endless type by the so-called cord winding method to wind one or several cords spirally.

When the above mentioned elastic cords are used as the carcass cords and the belt cords 11, the protection of the tread crown portion 20 when inflated to a regular pressure is larger than that when inflated to 5% pressure, and accordingly the tension T of the belt cords 11 increases, and the critical speed for generation of a standing wave becomes higher.

Test tyres of size 46 x 17 R20 were fabricated in the construction shown in Fig.1 and according to the specification given in Table 1.

In all the test tyres, the number of plies in the carcass was 6 in the belt and in the cut breaker 2 and the carcass turn up structure was 4.2 as shown in Fig.1.

The cord composition of carcass cord, breaker cord and cut breaker cord is shown in Table 2.

The composition of the protective cord is given in Table 3.

Each test tyre was subjected to a taxi simulation test as a durability test, where the test tyre was inflated to its regular pressure and then it was run at 20 km/h to 2000 km under a excessive load of 1.2 times a regular load.

The test results are shown as Durability in table 1, where "O" indicates that the tyre was considered to have ability to run over 2000km since no damage was found upon inspection after the 2000 run.

"D" indicates that the tyre was considered to have ability to run about 2000 km since damage was found on the inside and/or outside of the tyre upon inspection after the 2000km run.

"B" indicates that the tyre was broken before the running distance thereof reached 2000 km.

The cornering power was measured by using a flat belt type indoor testing machine. The test results are indicated in the index regarding Reference tyre 3 as 100. the greater the index the better the result.

Further, the cut resistance was evaluated as the time until the tyre was broken when the tyre loaded to 150% was rotated on a drum provided with wedges (a) of 5mm in height and 0.5R in the radius of the tip as shown in Fig.7, and it is expressed as an index based on the assumption that reference tyre 3 is 100. The greater the index, the better the result. the approval standard is an index of 120 or more.

Thus, as apparent from the test results, the tyre according to the present invention was improved in cut resistance without sacrificing other performances.

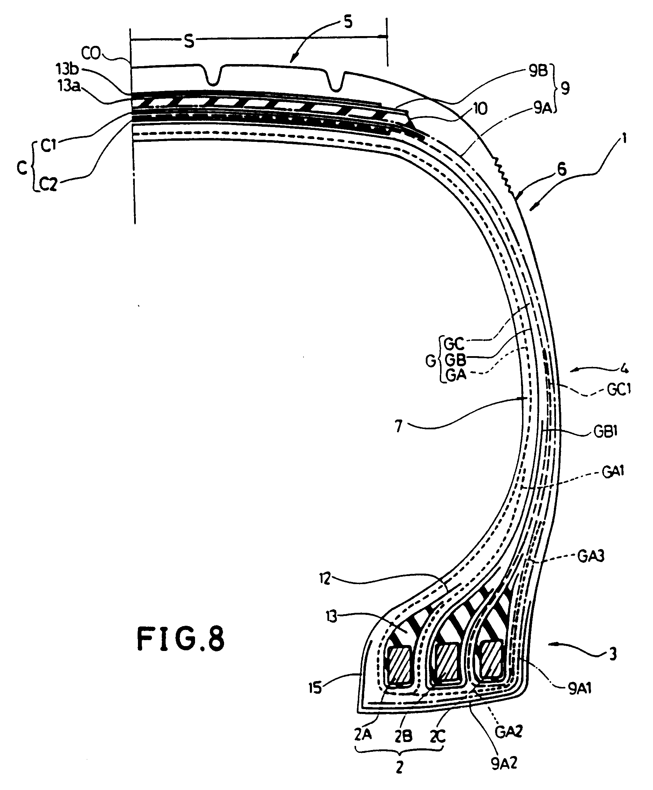

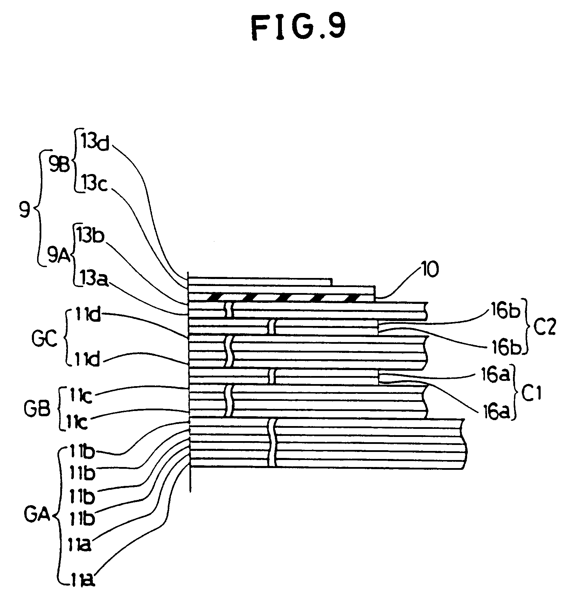

Figs. 8 and 9 show another embodiment of the present invention which is formed as an aircraft bias tyre of size 49 x 17 20/32 PR.

In Fig2 8 and 9, the tyre 1 has a toroidal tyre body 6 consisting of a pair of bead portions 3, a pair of sidewall portions 4 extending radially outwardly one from each bead portions 3, and a tread portion 65 extending between the radially outer ends of the sidewall, portions 4. Each of the bead portions 3 has a bead core, and each bead core 2 includes a first bead core 2A, a second bead core 2B, and a third bead core 2C being arranged from inside to the outside in the axial direction of the tyre.

The tyre body 6 is provided with a carcass 7 and a cut protector 9.

The carcass 7 consists of a carcass ply group G extending from the tread portions 5 to the bead portions 3 through the sidewall portions, and turned up around the bead cores 2A, 2C.

In this embodiment, the cut protector 9 disposed between the carcass and the tread comprises a carcass protective ply 9A and a tread protective layer 9B disposed radially outward thereof and a retread rubber layer 10.

The carcass protective ply 9A is disposed outside the carcass 7 and extends to cover the range from the tread portion 5 to the bead portion 3 through the sidewall portions 4. The layer 10 is disposed on the radially outer surface of the carcass protective ply 9A. Accordingly, this rubber layer 10 is sandwiched between the ply 9A and the layer 9B.

As shown in detail in Fig.9 the above mentioned carcass ply group F comprises:

a first carcass ply group GA (indicated by dotted lines in Fig.1) made of six carcass plies 11a, 11a, 11b, wound on the first bead core 2A from the inside to the outside thereof;

a second carcass ply group GB (indicated by solid lines in Fig.1) made of four carcass plies 11c wound on the second bead core 2B from the inside to the outside thereof, and

a third carcass ply group GC (indicated by broken lines in Fig.1) made of four carcass plies lie wound on the third bead core 2C from the inside to the outside thereof.

More specifically, the outer four carcass plies 11b out of the six carcass plies 11a, 11b, of the first carcass ply group GA, all carcass plies 11c of the second carcass ply group GB, and all carcass plies lid of the third carcass ply group GC are provided with turned up portions GA1, GB2, GC3, respectively, turned up around the first, second and third bead cores 2A, 2B, 2C.

The remaining inner two carcass plies 11a of the first carcass ply group GA are provided with a bottom portion GA2 passing beneath the first to third bead cores 2A to 2C, and a turned up portion GA3 extending radially outwardly from the axially outer edge of the bottom portion GA2 along the outer surface of the turned up portion GC1.

Furthermore, a filler 12 is disposed between each bead core and the carcass plies turned up there around so as to enclose the bead core, and in order to increase the stiffness of the bead portion 3, a triangular bead apex 13 made of hard rubber extending taperingly toward the radially outside thereof is disposed radially outside each bead core so as to be enveloped in the filler 12.

The bead apex 13 is preferably made of a hard rubber with a dynamic elastic modulus (E*) of 200 to 1500 kgf/sq.cm or more preferably 900 kgf/sq.cm or more.

Here the dynamic elastic modulus (E*) is the value of measuring a specimen of 4mm long and 2mm thick, in the conditions of 77 degrees C, initial distortion of 10% amplitude of 2.0% and frequency of 50 Hz, by using a viscoelastic spectrometer manufactured by Iwamoto Seisakusho in Japan.

Further, a rim chafer 15 is provided along the contour of the bead portions 3 to prevent frictional damage with the wheel rim.

The carcass protective ply 9A is disposed outside the carcass 7, and comprises a main portion 9A1 extending between the bead portion 3 through the tread portion 5 and sidewall portions 4 along the outside of the third carcass ply group Gc.

The main portion 9A1 extends, in each bead region, along the outer surface of the turned lip portion GA3 of the carcass ply 11a of the first carcass ply group GA.

In this embodiment, the carcass protective ply 9A has an extending portion 9A2 extending from the main portion 9A1 toward the inside of the tyre beneath the bottom portion GA2.

The tread protective layer 9B is disposed outside the carcass protective ply 9A over the retread rubber 10, and consists of at least one ply of protective cords 20, and, in this embodiment, a wide ply 13c and a narrow ply 13d. the wide ply 13c is disposed inside.

This tread protective layer 9B not only improves the cut resistance of the tread portion 5, but also lessens the large stiffness difference between then inside reinforcement layers and the tread rubber to reduce the shearing stress between them, so that the growth of the injury of the tread portion 5 may be restricted.

Therefore, the tread protective layer 9B is preferably disposed over the entire width of the tread portion 5.

The width of the narrow ply 13c is at least 70% or more of the ground contact width S of the tread when the tyre 1 is mounted on a regular rim and inflated to a regular pressure to be located with a standard load. More preferably, considering the maximum deformation at the time of taking off and landing, it is set to be equal to the overall width of the tread portion 5 as stated above.

Meanwhile, for the cut protector 9, in addition to the two-layer structure as stated above a one layer or a three or more layer structure can be used.

The protective cords 20 used in the cut protector 9 have been described in detail (see the explanation in the former embodiment).

The protective cord 20 is disposed at an angle of 0 to 90 degrees with respect to the tyre equator CO, and former plies 13c, 13d of the tread protective layer 9B.

In order that the tread protective layer 9b to enhance the cur resistance may further improve the inward bending stiffness of the tread portions 5 to increase cornering power, the protective cords 20 are inclined in the range of 10 to 70 degrees, and preferably 30 to 60 degrees to the tyre equator CO so that the plies 13c, 13d intersect each other.

The density of the protective cord 20 is 20 to 60 ends/5 cm, and more preferably 30 to 50 ends/5 cm. If less than 20, the cut resistance is lowered, and if exceeding 60, the tyre weight increases and the cost becomes higher.

It is also possible to form the plies 13c, 13d by a cord winding method in which one or a plurality of protective cords 20 are wound spirally and continuously at a small angle with respect to the peripheral direction of the tyre.

EP 0 392 117 B1

The inclination of the protective cords 20 of the plies 13a, 13b of the carcass protective ply 9A is determined depending on the carcass cord of the carcass 7.

The carcass cords in each of the carcass ply groups GA to GC are inclined in a range of 20 to 50 degrees ,ore preferably 30 to 45 degrees, to the equator of the tyre, and the angles of the carcass cords are gradually decreased from the inside first carcass ply group G to the outside third carcass ply group GC. For example, the cord angles are set to be 25 to 50 degrees, and more preferably 30 to 45 degrees, and in this embodiment 40 degrees in the innermost carcass ply group GA, and they are gradually decreased at steps of 1 to 5 degrees, preferably 2 degrees for each successive carcass ply group.

That is, when the cord angle of the first carcass ply group is 40 degrees as explained above, the cord angle of the second carcass ply group GB is 38 degrees, and that of the third carcass ply group GC is 36 degrees approximately.

In each carcass ply group, meanwhile, each ply is arranged to intersect the adjacent ply.

Therefore, the ply stiffness is sequentially increased from the inside to outside, and as a result the tyre is given the desired inflated shape.

The array angle of the protective cords 20 of the carcass protective ply 9A can be set in the range of 0 to 90 degrees, preferably 10 to 70 degrees, to the tyres equator CO as stated above, but from the viewpoint of the carcass 7 arranged as shown above, it is desired to set smaller than the cord angle of the third carcass ply group GC, for example, about 34 degrees.

The height of the turned up portions GA1 to GC1 of the carcass ply group GA to GC increases gradually in an outward direction. The highest turned up portion Gc1 of the third carcass ply group GC terminates near the position where the sectional width of the tyre is a maximum.

Furthermore, in this embodiment, the first and second cap ply layer C1, C2 are disposed inwardly of the tread, between the second carcass ply group GB and the third carcass ply group GC, and between the third ply group GC and the carcass protective ply 9A respectively.

The cap ply layer C1 is composed of two cap plies 16a, and the cap ply layer C2 is composed of two cap plies 16b. the cords of the first cap ply layer c1 and the cords of the second cap ply layer C2 are respectively arranged at an angle of 35 degrees and 34 degrees to the equator of the tyre, and each cap ply intersects the adjacent cap ply and/or adjacent carcass ply.

The cap plies 16a, 16b of the first and second cap ply layers C1, C2 are formed in a smaller width as compared with the carcass plies which are turned up around the bead cores, so that the edges thereof are terminated radially outwardly of the respective bead portions.

Furthermore, at least one of them has its width set at about 110 to 130% of the ground contacting width S in the axial direction of the tyre.

Therefore, the cap ply layer can particularly reinforce the tread portion 5 where a large load acts during use, and moreover since the cap ply layer is disposed between the carcass ply groups, the stress due to shrinkage of the cap ply by the heat of vulcanisation may be distributed between the carcass ply group positioned inside thereof.

The carcass ply cords and cap ply cords are made of organic fibres such as polyethylene fibres polyurethane fibres , cellulose fibres, cellulose ester fibres aromatic polyamide fibres or the like. In particular, nylon 66 and other aliphatic polyamide fibres are preferably used.

Furthermore, the carcass ply cords and cap ply cords are coated with a relatively soft topping rubber the 300% modulus of which is 80 to 160 kgf/sq.cm or more preferably 90 to 110 kgf/sq.mm.

The retread rubber 10 is disposed inside the tread protective layer 9B over the tyre thereof, and its thickness is 2.0mm or more. This retread rubber prevents injuries to the reinforcements such as the carcass plies and others which may occur when removing the tread rubber for regeneration of the tyre, or retreading.

The hardness of the retread rubber 10 is preferably set lower than that of the tread rubber in order to allow easy removal of the tread rubber and to prevent damage to the carcass 7. In order to protect the carcass 7, it may be set to be equal to or superior to the hardness of the tread rubber.

Alternatively only either one of the carcass protective ply 9A or the tread protective layer 9B may be used as the duty protector 9.

Conforming to the specification shown in Fig.8 and Table 4, aircraft bias tyres of size 49 x 17 32PR were experimentally manufactured as test tyres. the details of each cord in table 4 are given in the above mentioned table 3.

The test tyres were inflated to the regular pressure, and were subjected to a durability test in accordance with the taxi simulation test specified in the United States Aviation Bureau Standard TSO-C62c. In the Table 4, the circle mark indicates that the tyre withstood the take-off test at 200% load after the taxing test, and the numeral indicates the number of tests until breakage.

10

The cornering power was measured by using a flat belt type indoor testing machine. the test results are indicated in the index regarding Reference tyre 1 as 100. the greater the index, the better the result.

The tyre weight is also indicated in an index on the basis of reference tyre 1as 100.

Further, the cut resistance was evaluated as the time until the tyre was broken when the tyre loaded with 150% was rotated on a drum provided with wedges (a) of 5mm in height and 0.5R in the radius of the tip as shown in Fig.7 and it is expressed in an index based on an assumption that reference tyre 1 is 100. The greater the index, the better the result. the approval standard is the index of 120 or more.

Thus, as apparent from the test results, the bias tyres according to the present invention were improved in the cut resistance without sacrificing other performances.

```
TABLE 1
-----------------------------------------------------------------------------------
              Ex.1   Ex.2   Ex.3   Ex.4   Ex.5   Ex.6   Ref.1  Ref.2  Ref.3  Ref.4
-----------------------------------------------------------------------------------
Carcass
   Cord       A-1    A-1    A-2    A-2    A-3    A-3    A-1    A-2    A-3    A-1
   Cord angle(°)  85  85    85     85     85     85     85     85     85     85

Belt
   Cord angle(°)  0   0     0      0      0      0      0      0      0      0

Cut breaker   None          None          None                 None   None
   Cord angle(°)    19            19            19     19                    19

Cut protector
   Cord       B-1    B-1    B-2    B-2    B-1    B-2    B-3    B-3    None   None
   Cord angle(°)  35  35    35     35     35     35     35     35
   Ends/5 cm  40     40     30     55     30     55     40     40
-----------------------------------------------------------------------------------
Durability    O      O      O      O      D      D      O      O      B      D

Cornering power  105  130  105    135    105    135    130    105    100    130

Cut resistance  123   130   120    130    125    125    160    110    100    102
-----------------------------------------------------------------------------------
```

TABLE 2

| | Carcass cord | | | Belt cord | Auxiliary cord |
|---|---|---|---|---|---|
| | A-1 | A-2 | A-3 | | |
| Cord material | Nylon 66 | Nylon 66 | Nylon 66 | Nylon 66 | Nylon 66 |
| Cord thickness | 1890d/3 | 1890d/3 | 1890d/3 | 1680d/4 | 1680d/4 |
| Cord twists (turns/100 mm) | 26 | 34 | 23 | - | - |
| S5 (%) | 6.2 | 7.7 | 4.5 | 4.1 | 4.8 |
| S10 (%) | 9.5 | 11.7 | 7.5 | 6.8 | 8.2 |
| S20 (%) | 14.7 | 17.5 | 11.2 | 9.7 | 11.3 |
| D5 ($\%/d \times 10^{-4}$) | 9.84 | 11.32 | 7.32 | 5.54 | 6.15 |
| D10 ($\%/d \times 10^{-4}$) | 15.08 | 17.20 | 12.20 | 9.19 | 10.51 |
| D20 ($\%/d \times 10^{-4}$) | 23.33 | 25.74 | 16.00 | 13.11 | 14.49 |
| Elongation at rupture (%) | 24.8 | 26.8 | 19.6 | 17.2 | 22.4 |
| Cord tension (kg) | 48.2 | 43.8 | 54.0 | 56.5 | 52.5 |
| Initial modulus of elasticity (kgf/sq.mm) | 175 | 145 | 270 | 320 | 234 |

```
TABLE  3
------------------------------------------------------------
CORD                      B-1          B-2          B-3
                          Hybrid       Hybrid
------------------------------------------------------------
MAIN CORD
    Cord material         Nylon 66     Nylon 66     Nylon 66
    Cord thickness        1260d/2      1260d/2      1260d/2
    Twist                 S            S            S
------------------------------------------------------------
WIRE
  Inner wire                                        None
    Material              Steel        Steel
    Diameter (mm)         0.15         0.15
    Spiral pitch (mm)     0.88         0.88
    Twist                 Z            Z

  Outer wire                           None         None
    Material .            Steel
    Diameter (mm)         0.15
    Winding pitch (mm)    1.39
    Twist                 S
------------------------------------------------------------
```

TABLE 4

| | Ex.1 | Ex.2 | Ex.3 | Ex.4 | Ref.1 | Ref.2 | Ref.3 |
|---|---|---|---|---|---|---|---|
| CARCASS | | | | | | | |
| Cord | B-3 | B-3 | B-3 | B-3 | B-3 | B-3 | B-3 |
| 1st ply group (GA) | | | | | | | |
|   No. of plies | 6 | 6 | 6 | 6 | 6 | 6 | 6 |
|   Cord angle (deg) | 40 | 40 | 40 | 40 | 40 | 40 | 40 |
| 2nd ply group (GB) | | | | | | | |
|   No. of plies | 4 | 4 | 4 | 6 | 6 | 4 | 4 |
|   Cord angle (deg) | 38 | 38 | 38 | 38 | 38 | 38 | 38 |
| 3rd ply group (GC) | | | | | | | |
|   No. of plies | 4 | 4 | 4 | 6 | 6 | 4 | 4 |
|   Cord angle (deg) | 36 | 36 | 36 | 36 | 36 | 36 | 36 |
| CAP PLY * | | | | None | None | | |
| Cord | B-3 | B-3 | B-3 | | | B-3 | B-3 |
| 1st ply (C1) | | | | | | | |
|   No. of plies | 2 | 2 | 2 | | | 2 | 2 |
|   Cord angle (deg) | 36 | 36 | 36 | | | 36 | 36 |
| 2nd ply (C2) | | | | | | | |
|   No. of plies | 2 | 2 | 2 | | | 2 | 2 |
|   Cord angle (deg) | 34 | 34 | 34 | | | 34 | 34 |
| CUT PROTECTOR | | | | | | | |
| Carcass protective ply (9A) | | | | | | | None |
|   Cord | B-1 | B-1 | B-3 | B-2 | B-3 | B-3 | |
|   No. of plies | 2 | 2 | 2 | 2 | 2 | 2 | |
|   Ends/5 cm | 40 | 40 | 35 | 45 | 35 | 35 | |
|   Cord angle (deg) | 35 | 35 | 35 | 35 | 35 | 35 | |
| Tread protective ply (9B) | | | | | | None | |
|   Cord | B-1 | B-2 | B-2 | B-3 | B-3 | | B-3 |
|   No. of plies | 2 | 2 | 2 | 2 | 2 | | 2 |
|   Ends/5 cm | 35 | 35 | 45 | 45 | 35 | | 35 |
|   Cord angle (deg) | 35 | 35 | 35 | 35 | 35 | | 35 |
| Durability | 0 | 0 | 0 | 0 | 61 | 0 | 50 |
| Cornering power | 100 | 100 | 100 | 100 | 100 | 90 | 95 |
| Cut resistance | 130 | 135 | 125 | 120 | 100 | 85 | 90 |
| Weight | 99 | 100 | 98 | 102 | 100 | 95 | 93 |

\* 1st cap ply (C1) position : Between (GB) and (GC)
   2nd cap ply (C2) position : Between (GB) and (9A)

## Claims

1. A pneumatic tyre comprising a carcass ply (7) extending between bead portions (3) of the tyre and turned up around a pair of bead cores (2) one disposed in each bead portion (3), a tread (5) disposed radially outside the carcass ply (7), and a cut protector (16) disposed between the tread (5) and the carcass ply, said cut protector (16) composed of at least one ply (16a) of protective cords (20), characterised by each said protective cord (20) comprising a main cord (21) and at least one winding of a metallic wire (22) spirally wound over the main cord, said main cord composed of a plurality of strands (21A) twisted together, each said strand (21A) being made of organic fibre filaments, the direction of the winding of the metallic wire (22a,22b) being opposite to the direction of the twist of the strands (21A), the total denier of the main cord (21) being 600 to 4050 (300d/2 to 1350d/3), the metallic wire (22) being thinner than the main cord (21) and the diameter of the wire (22) being 0.05 to 0.3mm.

2. A pneumatic tyre according to claim 1 characterised in that the wire winding (22) comprises a single winding of a metallic wire (22) spirally winding the main cord (21).

3. A pneumatic tyre according to claim 1 characterised in that the wire winding (22) comprises an inner winding of a metallic wire (22a) spirally winding the main cord (21) and an outer winding of a metallic wire (22a) spirally winding the main cord (21) on the outside of the inner metallic wire (22A) in the reverse direction of the inner metallic wire (22a).

4. A pneumatic tyre according to claim 3 characterised in that the spiral winding pitch of the outer metallic wire (22b) is larger than that of the inner metallic wire (22a).

5. A pneumatic tyre according to any one of claims 1 to 4 characterised by the carcass (7) being a radial ply carcass composed of at least one ply of organic fibre cords arranged at an angle of 75 to 80 degrees to the equator of the tyre and extending from tread portion (5) through sidewall portions (4) to the bead portions (3) and turned up around the bead cores (2) a belt (1) comprising at least one ply (10a) of organic fibre cords arranged at an angle of more than 5 degrees to the equator of the tyre.

6. A pneumatic tyre according to any one of claims 1 to 4 characterised by the carcass being composed of a plurality of plies G of organic cords inclined with respect to the equator (CO) of the tyre and the cut protector cords (20) are at an angle of 0 to 90 degrees to the equator (CO0 of the tyre.

7. A pneumatic tyre according to claim 6 characterised in that the cut protector (16) comprises a tread protective layer (9B) composed of the protective cords and disposed radially inwardly of the tread portion (5), the width of the tread protective layer (9B) being 70% or more of the ground contacting width at the outside of the tread portion in the axial direction of the tyre when mounted on a rim and inflated to a regular pressure and loaded with a regular load.

8. A pneumatic tyre according to claim 7 characterised in that the cut protector (16) comprises a carcass protective ply (9A) composed of the protective cords and covering the outside of the carcass (7) in a range from the tread portion (5) to each bead portion (3) through the sidewall portions (4).

9. A pneumatic tyre according to claim 8 characterised in that the cut protector comprises a carcass protective ply (9A), a tread protective layer (9B) the tread protective layer (9B) being radially outside a retread rubber layer (10) which is sandwiched by the layers (9A,9B).

**Patentansprüche**

1. Luftreifen, welcher umfaßt eine Karkasslage (7), die sich zwischen Wulstabscnitten (3) des Reifens erstreckt und um ein Paar Wulstkerne (2) herum nach oben geschlagen ist, von denen je einer in jedem Wulstabschnitt (3) angeordnet ist, einen radial außerhalb der Karkasslage (7) angeordneten Laufstreifen (5) und einen zwischen dem Laufstreifen (5) und der Karkasslage angeordneten Schnitt-Protektor (16), welcher Schnitt-Protektor (16) aus mindestens einer Lage (16a) von Schutzkorden (20) besteht, dadurch gekennzeichnet, daß jeder Schutzkord (20) umfaßt einen Hauptkord (21) und mindestens eine Wicklung aus einem Metalldraht (22), der wendelförmig um den Hauptkord gewickelt ist, welcher Hauptkord aus einer Vielzahl von miteinander verdrillten Strängen (21A) besteht, von denen jeder Strang (21A) aus organischen Faserfäden hergestellt ist, die Wickelrichtung des Metalldrahtes (22a, 22b) umgekehrt zur Verdrillrichtung der Stränge (21A) liegt, der Gesamt-Denierwert des Hauptkordes (21) 600 bis 4 050 (300 d/2 bis 1 350 d/3) beträgt, der Metalldraht (22) dünner als der Hauptkord (21) ist und der Durchmesser des Drahtes (22) 0,05 bis 0,3 mm beträgt.

2. Luftreifen nach Anspruch 1, dadurch gekennzeichnet, daß die Drahtwicklung (22) eine einzige Wicklung eines wendelförmig um den Hauptkord (21) gewickelten Metalldrahtes (22) umfaßt.

**3.** Luftreifen nach Anspruch 1, dadurch gekennzeichnet, daß die Drahtwicklung (22) eine Innenwicklung aus einem wendelförmig um den Hauptkord (21) gewickelten Metalldraht (22a) und eine Außenwicklung eines wendelförmig den Hauptkord (21) an der Außenseite des inneren Metalldrahtes (22A) in umgekehrter Richtung zum inneren Metalldraht (22a) umwickelnden Metalldrahtes (22a) umfaßt.

**4.** Luftreifen nach Anspruch 3, dadurch gekennzeichnet, daß der Wickelschritt des äußeren Metalldrahtes (22b) größer als der des inneren Metalldrahtes (22a) ist.

**5.** Luftreifen nach einem der Ansprüche 1 bis 4, dadurch gekennzeichnet, daß die Karkasse (7) eine Radiallagen-Karkasse ist, die zusammengesetzt ist aus mindestens einer Lage von organischen Fiberkorden, die mit einem Winkel von 75 bis 80° zum Reifenäquator angeordnet sind und sich von dem Laufstreifen-Abschnitt (5) durch Seitenwand-Abschnitte (4) zu den Wulst-Abschnitten (3) erstrecken und um die Wulstkerne (2) nach oben zurückgeschlagen sind und daß ein Gürtel (1) mindestens eine Lage (10a) von organischen Faserkorden umfaßt, die mit einem Winkel von mehr als 5° zum Reifenäquator gelegt sind.

**6.** Luftreifen nach einem der Ansprüche 1 bis 4, dadurch gekennzeichnet, daß die Karkasse zusammengesetzt ist aus einer Vielzahl von Lagen G organischer Korde, die gegenüber dem Äquator (CO) des Reifens geneigt sind und daß die Schnittprotektorkorde (20) mit einem Winkel von 0 bis 90° zum Äquator (CO) des Reifens gelegt sind.

**7.** Luftreifen nach Anspruch 6, dadurch gekennzeichnet, daß der Schnittprotektor (16) umfaßt eine Laufstreifen-Schutzschicht (9B), die aus den Schutzkorden zusammengesetzt und radial innerhalb des Laufstreifen-Abschnitts (5) angeordnet ist, wobei die Breite der Laufstreifen-Schutzschicht (9b) 70% oder mehr der Bodenberührungsbreite an der Außenseite des Laufstreifens in Axialrichtung des Reifens beträgt, wenn der Reifen auf einer Felge aufgezogen, auf einen regulären Druck aufgepumpt und mit einer regulären Last belastet ist.

**8.** Luftreifen nach Anspruch 7, dadurch gekennzeichnet, daß der Schnittprotektor (16) umfaßt eine Karkass-Schutzlage (9A), die aus den Schutzkorden besteht und die Außenseite der Karkasse (7) in einem Bereich von dem Laufstreifenabschnitt (5) durch die Seitenwand-Abschnitte zu jedem Wulstabschnitt (3) bedeckt.

**9.** Luftreifen nach Anspruch 8, dadurch gekennzeichnet, daß der Schnitt-Protektor eine Karkass-Schutzlage (9A) und eine Laufstreifen-Schutzlage (9B) umfaßt, wobei die Laufstreifen-Schutzlage (9B) sich radial außerhalb einer Laufstreifen-Neugummierungs-Schicht (10) befindet, die zwischen den Schichten (9A, 9B) eingeschlossen ist.

## Revendications

**1.** Pneumatique comprenant une nappe de carcasse (7) disposée entre des parties de talon (3) du pneumatique et repliée autour d'une paire de tringles (2), disposées chacune dans une partie de talon (3), une bande de roulement (5) disposée radialement à l'extérieur de la nappe de carcasse (7), et un organe protecteur (16) contre les coupures placé entre la bande de roulement (5) et la nappe de carcasse, l'organe protecteur (16) contre les coupures étant composé d'au moins une nappe (16a) de câblés protecteurs (20), caractérisé en ce que chaque câblé protecteur (20) comporte un câblé principal (21) et au moins un enroulement d'un fil métallique (22) enroulé en spirale sur le câblé principal, le câblé principal étant composé de plusieurs brins (21A) qui sont retordus, chaque brin (21A) étant formé de filaments de fibres organiques, le sens d'enroulement du fil métallique (22a, 22b) étant opposé au sens de retordage des brins (21A), le denier total du câblé principal (21) étant compris entre 600 à 4 050 (300 d/2 à 1 350 d/3), le fil métallique (22) étant plus mince que le câblé principal (21) et le diamètre du fil métallique (22) étant compris entre 0,05 et 0,3 mm.

**2.** Pneumatique selon la revendication 1, caractérisé en ce que l'enroulement (22) du fil comprend un enroulement unique d'un fil métallique (22) enroulé en spirale autour du câblé principal (21).

**3.** Pneumatique selon la revendication 1, caractérisé en ce que l'enroulement (22) du fil comprend un enroulement interne d'un fil métallique (22a) enroulé en spirale sur le câblé principal (21) et un enroulement externe d'un fil métallique (22a) enroulé en spirale autour du câblé principal (21) à l'extérieur du fil métallique interne (22a) en sens inverse du sens métallique interne (22a).

**4.** Pneumatique selon la revendication 3, caractérisé en ce que le pas d'enroulement spiralé du fil métallique externe (22b) est supérieur à celui du fil métallique interne (22a).

**5.** Pneumatique selon l'une quelconque des revendications 1 à 4, caractérisé en ce que la carcasse (7) est une carcasse à nappes radiales composée d'au moins une nappe de câblés de fibres organiques disposée suivant un angle de 75 à 80° avec l'équateur du pneumatique et disposée de la partie (5) de bande de roulement dans les parties de flanc (4) vers les parties de talon (3) et repliée autour des tringles (2), une ceinture (1) comprenant au moins une nappe (10a) de câblés de libres organiques étant disposée suivant un angle supérieur à 5° par rapport à l'équateur du pneumatique.

**6.** Pneumatique selon l'une quelconque des revendications 1 à 4, caractérisé en ce que la carcasse est composée de plusieurs nappes G de câblés organiques inclinés par rapport à l'équateur (CO) du pneumatique, et les câblés (20) de l'organe protecteur contre les coupures forment un angle de 0 à 90° avec l'équateur (CO) du pneumatique.

**7.** Pneumatique selon la revendication 6, caractérisé en ce que l'organe protecteur (16) contre les coupures comprend une couche protectrice (9B) de la bande de roulement composée de câblés protecteurs et disposée radialement à l'intérieur de la partie de bande de roulement (5), la largeur de la couche protectrice (9B) de bande de roulement étant au moins égale à 70 % de la largeur de contact avec le sol à l'extérieur de la partie de bande de roulement dans la direction axiale du pneumatique lorsque celui-ci est monté sur une jante, est gonflé à la pression normale et est soumis à la charge normale.

**8.** Pneumatique selon la revendication 7, caractérisé en ce que l'organe protecteur (16) contre les coupures comprend une nappe protectrice (9A) de carcasse composée de câblés protecteurs et recouvrant l'extérieur de la carcasse (7) dans la zone allant de la partie de bande de roulement (5) vers chaque partie de talon (3) et dans les parties de flanc (4).

**9.** Pneumatique selon la revendication 8, caractérisé en ce que l'organe protecteur contre les coupures comprend une nappe protectrice (9A) de carcasse, et une nappe protectrice (9B) de bande de roulement, la nappe protectrice (9B) de bande de roulement étant placée radialement à l'extérieur d'une couche (10) de caoutchouc de rechapage qui est disposée entre les couches (9A, 9B).

# FIG.1

# FIG.2

# FIG.3 (A)

Pa

# FIG.3 (B)

Pb

Pc

# FIG.4

# FIG.5 (A)

# FIG.5 (B)

# FIG.6

# FIG.7

FIG.8

# FIG.9